# EUROPÄISCHE PATENTSCHRIFT

(11) **EP 1 505 372 B1**
(45) Veröffentlichungstag und Bekanntmachung des Hinweises auf die Patenterteilung: **23.03.2011**
(21) Anmeldenummer: 04015707.5
(22) Anmeldetag: 03.07.2004
(51) Int. Cl.: G01F 1/28

(54) **Armatur zum Messen und Einstellen der Durchflussmenge eines Hydraulischen Mediums durch eine Rohrleitung**
Fixture for measuring and for adjusting the throughput of a hydraulic medium through a tube
Garniture de mesure et de réglage du débit d'un fluide hydraulique dans un tube

(30) Priorität: 31.07.2003 DE 20311813 U
(43) Veröffentlichungstag der Anmeldung: 09.02.2005
(73) Patentinhaber: Watts Industries Deutschland Gesellschaft mit beschränkter Haftung, 76829 Landau (DE)
(72) Erfinder: Spiess, Fritz, 8918 Unterlunkhofen (CH)
(74) Vertreter: Patentanwälte Bitterich, Dr. Keller, Schwertfeger

(56) Entgegenhaltungen:
- EP-A- 0 797 080
- EP-A- 0 943 901
- DE-U- 8 220 193
- US-A- 2 593 339
- US-A- 3 848 584
- US-B1- 6 308 582

## Beschreibung

Die Erfindung betrifft eine Armatur zum Messen und Einstellen der Durchflussmenge eines hydraulischen Mediums durch eine Rohrleitung gemäß dem Oberbegriff des Patentanspruchs 1.

Armaturen dieser Art sind für verschiedene Durchflussmedien verwendbar; insbesondere werden sie bei Heizungs- und Kühlanlagen eingesetzt, um den Durchfluss des betreffenden Mediums in den verschiedenen Leitungssträngen anzuzeigen. Die Anzeige entspricht physikalisch einer Messung der augenblicklichen Durchflussmenge (Volumen pro Zeiteinheit) in Abhängigkeit von der Durchflussgeschwindigkeit; das Anzeigegerät zeigt die Durchflussmenge unmittelbar in der Einheit [l/min.] an.

Solche Durchflussmengenmesser sind oft mit Drosselorganen zur Einstellung einer bestimmten Durchflussmenge kombiniert, wie zum Beispiel einem Kugelhahn, Ventil oder dergleichen, die in das Armaturgehäuse integriert oder separat im Leitungsstrang eingebaut sein können.

Ein Durchflussreguliergerät dieser Art ist aus der EP 0 797 080 A2 bekannt. Es handelt sich um ein Durchflussregulierventil mit Durchflussmesser, das auf eine möglichst geringe Höhe hin konstruiert wird, um auch bei geringen Platzverhältnissen eingebaut werden zu können. Zu diesem Zweck sind alle Verstell- und Anzeigebewegungen nicht axial, sondern polar ausgeführt. Insbesondere sind die Drehspindel des Ventils als Drehschieber und die Skala der Anzeigeeinrichtung als Drehbüchse ausgebildet. Hydraulisch gesehen umfasst die bekannte Armatur in einem zylindrischen Armaturgehäuse einen Durchfluss-Hauptkanal, wobei das Armaturgehäuse aus einem senkrecht zur Rohrachse orientierten Stutzen besteht, in dessen Öffnung, diese nach außen abschließend, die Durchfluss-Messeinrichtung gehalten ist. Dabei ist ein Prallteller des Messteils in einer Messbohrung angeordnet und durch eine in einer Axialbohrung längsbeweglich geführten Anzeigestange mit der rotierenden Skala des außerhalb des Stutzens angeordneten Anzeigeteils verbunden. Der Durchfluss-Hauptkanal zwischen Einlaufbohrung und Auslaufbohrung der Armatur ist durch die Messbohrung sowie eine sich an diese anschließende Querbohrung gebildet.

Ein weiteres bekanntes Durchflussreguliergerät dieser Art besteht aus einem zylindrischen Gehäuse, das in einen Strömungskanal im Vorlauf eingesetzt werden kann (DE 31 15 572 A1). Dieses Gehäuse besitzt einen Rohrabschnitt aus transparentem Material als Schauglas, in dem ein Kolben gegen die Kraft einer Feder bewegbar ist, dessen von der Menge und Geschwindigkeit des durchfließenden Mediums abhängige Stellung durch seitliche Durchbrüche als Fenster in dem Gehäuse erkennbar ist. Diesem Mess- und Anzeigeteil ist ein Kugelhahn zur Regulierung des Durchflusses nachgeordnet.

Bei diesem Gerät wird zwar die Durchflussmenge im Hauptstrom gemessen; das Medium durchströmt jedoch fortwährend das Schauglas. Das hat zur Folge, dass sich an der Innenwand des Schauglases Ablagerungen bilden, welche die Transparenz sukzessive verringern, bis letztlich die Anzeige nicht mehr erkennbar ist. Bei solchen Ablagerungen handelt es sich um Schwebeteilchen, die bei derartigen Anlagen üblicherweise in bestimmter Konzentration im Medium verteilt sind. Die Schwebeteilchen sind hauptsächlich Schmutzpartikel und Abbauprodukte aus Korrosionsvorgängen bei den verschiedenen Anlagenkomponenten wie Rohrleitungen, Heizkessel, Wärmetauscher, Armaturen, Pumpen usw.

Auch ist der bei diesem Gerät für die Einstellung des Volumenstroms verwendete Kugelhahn wenig geeignet für eine genaue Einstellung, da dessen Drehwinkel nur 90° beträgt, was das Auflösevermögen sehr einschränkt.

Bei einer weiteren bekannten gattungsgemäßen, ebenfalls im Vorlauf einzusetzenden Armatur dieser Art ist außerhalb des Hauptgehäuses und achsparallel zum Durchfluss-Hauptkanal eine Bypassleitung angeflanscht (DE 82 20 193 U1). Die Bypassleitung weist ebenfalls ein Fenster auf und enthält als Messstrecke einen vom Teildurchfluss durchströmten Rohrabschnitt aus transparentem Material, in dem sich ein entsprechender, gegen eine Schraubenfeder beweglicher Messkolben befindet, der zugleich das Anzeigeorgan darstellt. Die Anzeige muss so skaliert sein, dass der Gesamtstrom, d. h. Hauptstrom und Nebenstrom, angezeigt wird.

Damit dieser Bypasskanal nicht dauernd durchströmt zu werden braucht und somit eine Verschmutzung der Messeinrichtung durch Ablagerungen aus dem Durchflussmedium in Grenzen gehalten werden kann, ist in den Anschlüssen des Bypasskanals an das Gehäuse je ein Absperrhahn vorgesehen, so dass der Teildurchfluss nur dann freigegeben zu werden braucht, wenn die Durchflussmenge ermittelt werden soll. Herstellung und Montage dieser bekannten Armatur sind sehr aufwändig, insbesondere sind zahlreiche Dichtungen erforderlich. Im übrigen müssen für eine korrekte Messung beide Absperrhähne geöffnet sein; ihren Zweck erfüllen sie jedoch nur dann, wenn sie gleich nach der Messung wieder vollständig geschlossen werden.

Die Nachteile der dauernd oder zumindest für die Messvorgänge durchflossenen Rohrabschnitte aus transparentem Material vermeidet eine ebenfalls im Vorlauf eingesetzte Armatur, bei der die Durchfluss-Messeinrichtung, die einen Messteil und einen Anzeigeteil aufweist, in der Öffnung eines Seitenstutzens, diese nach außen abschließend, eingesetzt ist (EP 0 943 901 A1). Dabei bildet der Seitenstutzen eine Nebenkammer, die ihrerseits mit ihrem Zu- und Abfluss einen Bypasskanal bildet. Die Durchfluss-Messeinrichtung selbst ist so gestaltet, dass ein vom Teildurchfluss beaufschlagter Prallteller des Messteils in der Bohrung eines den Zufluss zur Nebenkammer bildenden Rohrstücks angeordnet und durch eine in einer Axialbohrung längsbeweglich geführte Verbindungsstange mit einer Zeigerscheibe des außerhalb des Seitenstutzens angeordneten Anzeigeteils verbunden ist.

Wenn auch dieser Messeinrichtung wieder ein Kugelhahn zur Einstellung der gewünschten Durchflussmenge nachgeschaltet ist, so ist dank der Einlochbefestigung der Durchfluss-Messeinrichtung der Zusammenbau der Armatur erheblich vereinfacht. Ihr wesentlicher Vorteil besteht aber darin, dass der Anzeigeteil, wenn er auch vom Durchflussmedium benetzt wird, von der Strömung praktisch vollständig abgetrennt ist, wodurch die Ablesbarkeit auch ohne Wartung erhalten bleibt.

Grundsätzlich ist es auch bekannt, einen im Rücklauf einzusetzenden Durchflussmengenmesser mit einem Verteilerventil in der Weise zu kombinieren, dass das Schauglas des Durchflussmengenmessers mit dem Verschlusskörper des Einstellventils eine Art Spindel bildet, durch deren Drehung gegenüber dem Gehäuse die Öffnungsweite der Durchflussöffnung verändert und zugleich die Durchflussmenge abgelesen werden kann (DE 35 09 718 C2).

Während bei diesem bekannten Verteilerventil das Anströmglied des Durchflussmengenmessers und die Stellungsanzeigestange gemeinsam auslenkbar mit dem Ventilverschlusskörper verbunden sind, die daraus gebildete Spindel also einteilig ist, ist auch eine Durchfluss-Messeinrichtung bekannt, die ein in einem Spindelgehäuse drehbar gehaltenes Schauglas und einen Ventilverschlusskörper umfasst, der mit dem Schauglas drehfest, aber axial verschieblich verbunden ist (EP 1 130 364 A1). Bei dieser Armatur verbleibt die Mess- und Anzeigevorrichtung ortsfest, während bei Drehung des Schauglases lediglich der Ventilverschlusskörper zur Betätigung des Einstellventils in axialer Richtung auf und ab bewegt wird.

Vor diesem Hintergrund liegt der Erfindung die Aufgabe zugrunde, bei einer im Vorlauf einzusetzenden Armatur Möglichkeiten zu schaffen, um einerseits die Durchflussmenge unmittelbar im Hauptkanal messen zu können, also eine Messung eines Teilstromes mit daraus resultierenden Ungenauigkeiten zu vermeiden, zugleich die Anzeige von der dauernden oder zeitweisen Durchströmung eines transparenten Schauglases unabhängig zu machen, mit der Ablesung gleichzeitig die Einstellbarkeit der Durchflussmenge zu ermöglichen und trotz geringer Bauhöhe eine lange, fein ablesbare Skala zu realisieren.

Gemäß der Erfindung wird diese Aufgabe durch die Merkmale des Patentanspruchs 1 gelöst.

Vorteilhafte Weiterbildungen ergeben sich aus den Unteransprüchen.

Der wesentliche Vorteil der Erfindung ist darin zu sehen, dass der gesamte Durchfluss des Hauptkanals durch den Seitenstutzen mit Messbohrung und Nebenkammer geleitet wird, die ihrerseits über eine Querbohrung wieder in den Hauptkanal übergeht. Dadurch kann mittels der in den Seitenstutzen eingesetzten und diesen nach außen hin abschließenden Durchfluss-Messeinrichtung die Durchflussmenge im Hauptstrom zugleich gemessen und eingestellt werden, ohne dass der Durchfluss den Anzeigeteil mit dem Schauglas und der Skala erreicht. Auf diese Weise lässt sich eine permanente Anzeige des aktuellen Volumenstroms im Hauptkanal sicherstellen.

Die besondere platzsparende Gestaltung der erfindungsgemäßen Armatur ergibt sich, weil die Durchfluss-Messeinrichtung gewissermaßen als Schrägsitzventil ausgebildet ist.

Erfindungsgemäß besteht zugleich die Möglichkeit, neben der Einstellung der Durchflussmenge durch die Messeinrichtung in den Durchfluss-Hauptkanal noch ein Regelventil üblicher Bauart zu montieren, das entweder von Hand oder motorisch betätigt werden kann.

Die Erfindung wird nachstehend anhand der Zeichnung näher erläutert. Es zeigen
- Fig. 1: einen Schnitt durch eine erfindungsgemäße Armatur mit einer in einem Seitenstutzen gehaltenen Durchfluss-Messeinrichtung,
- Fig. 2: einen Längsschnitt durch die Durchfluss-Messeinrichtung,
- Fig. 3: einen Querschnitt entlang der Linie III-III in Fig. 2,
- Fig. 4a und b: einen der Fig. 1 entsprechenden Schnitt durch die erfindungsgemäße Armatur mit einer Möglichkeit zur Anbringung eines Anlagethermometers und
- Fig. 5: einen der Fig. 1 vergleichbaren Schnitt durch eine Armatur, die zusätzlich zur Durchfluss-Messeinrichtung ein Regelventil aufweist.

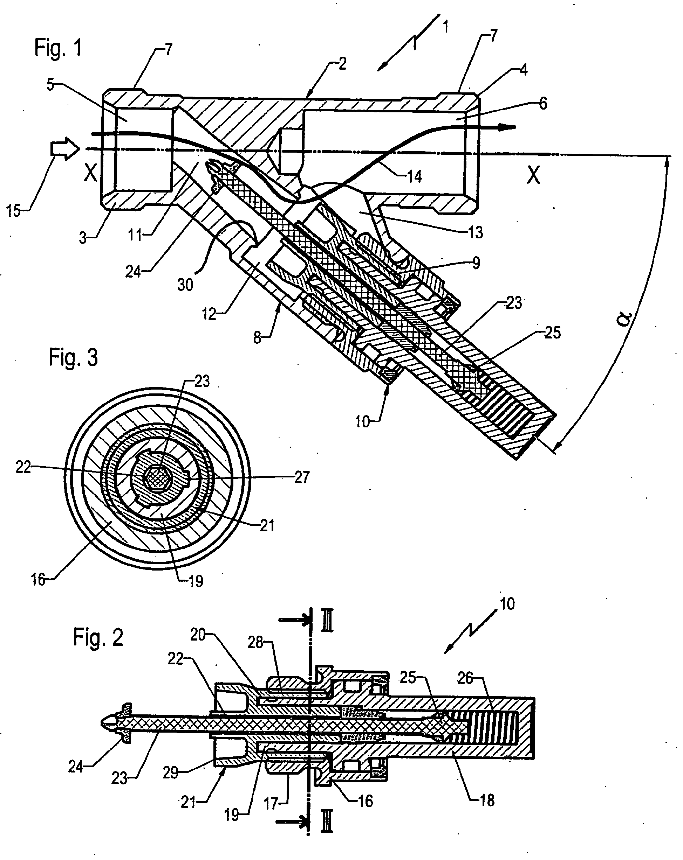

Die in Fig. 1 in einem Längsschnitt dargestellte Armatur eines Strangregulierventils 1 besitzt ein zylindrisches Armaturgehäuse 2 mit einem Einlaufstutzen 3 und einem Auslaufstutzen 4. Im Einlaufstutzen 3 befindet sich eine Einlaufbohrung 5 und im Auslaufstutzen 4 eine Auslaufbohrung 6. Beide Stutzen 3, 4 sind so ausgebildet, dass sie den Anschluss an eine Rohrleitung sicherstellen, beispielsweise mit einem Außengewinde 7 versehen.

An das im wesentlichen zylindrische Armaturgehäuse 2 ist schräg zur Achse X-X des Armaturgehäuses 2 unter dem spitzen Winkel α ein Seitenstutzen 8 angeformt, in dessen Öffnung 9 eine Durchfluss-Messeinrichtung eingeschraubt ist; die Durchfluss-Messeinrichtung ist insgesamt mit dem Bezugszeichen 10 bezeichnet. Durch den Seitenstutzen 8 wird im Bereich des Armaturgehäuses 2 eine Messbohrung 11 gebildet, welche die Einlaufbohrung 5 fortsetzt. Die Messbohrung 11 geht dann im Seitenstutzen 8 in eine Nebenkammer 12 über, die sich ihrerseits seitlich mittels einer Querbohrung 13 wieder zur Auslaufbohrung 6 hin öffnet. Auf diese Weise wird zwischen Einlaufbohrung 5 und Auslaufbohrung 6 durch Messbohrung 11, Nebenkammer 12 und Querbohrung 13 der Durchfluss-Hauptkanal gebildet, der durch eine Pfeillinie 14 angedeutet ist. Die Strömungsrichtung ist durch einen Pfeil 15 angedeutet.

Die Durchfluss-Messeinrichtung 10 ist als eigene Baugruppe in Fig. 2 im Längsschnitt und in Fig. 3 in einem Querschnitt entlang der Linie III-III in Fig. 2 dargestellt. Die Baugruppe 10 ist etwa spindelförmig gestaltet; sie besteht aus einem Spindelgehäuse 16 mit Außengewinde 17, mittels dessen sie in die mit einem entsprechenden Innengewinde ausgestattete Öffnung 9 des Seitenstutzens 8 eingeschraubt werden kann. In dem Spindelgehäuse 16 ist ein Schauglas 18 aus transparentem Material mit Skala drehbar gehalten. Das untere offene Ende 19 des Schauglases 18 reicht in eine ringförmige Ausnehmung 20 in einem Ventilverschlusskörper 21 hinein, der seinerseits eine zentrale Bohrung 22 aufweist, in der die Anzeigestange 23 der Messeinrichtung längsbeweglich ist. Die Anzeigestange 23 ist am unteren Ende mit einem Prallteller 24 und am oberen Ende mit einem Zeiger 25 versehen und gegen ein Federelement 26 bewegbar.

Der Ventilverschlusskörper 21 besitzt an der Innenwand der ringförmigen Ausnehmung 20 Längsrippen 27 (Fig. 3), die in entsprechende nutenförmige Ausnehmungen am unteren offenen Ende 19 des Schauglases 18 hineinragen und in diesen geführt sind. An seiner Außenseite trägt der Ventilverschlusskörper 21 ein Außengewinde 28, das mit einem entsprechenden Innengewinde am Spindelgehäuse 16 im Eingriff ist. Durch Drehen des Schauglases 18, das am oberen Ende mit einer Riffelung versehen sein kann, erfährt der Ventilverschlusskörper 21 ebenfalls eine Drehbewegung, die durch das Außengewinde 28 in eine Axialbewegung überführt wird. Durch diese Axialbewegung wird der untere stirnseitige Rand 29 des Ventilverschlusskörpers 21 gegen einen Ventilsitz 30 geführt, der am Armaturgehäuse 2 am Übergang der Messbohrung 11 zu der Nebenkammer 12 vorgesehen ist. Auf diese Weise kann durch einfaches Drehen der Baugruppe die Durchflussmenge verändert werden, wobei die jeweilige Durchflussmengelaufend abgelesen werden kann.

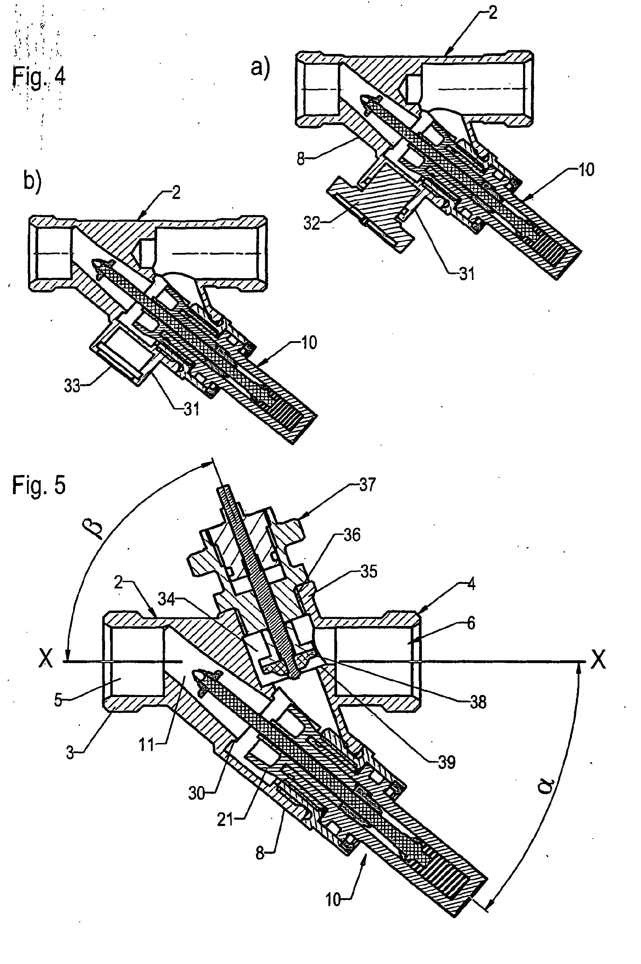

In Fig. 4 ist noch angedeutet, dass zum Beispiel an dem Seitenstutzen 8 noch ein weiterer Stutzen 31 angebracht werden kann, der eine topfförmige Ausnehmung bildet, in die in an sich bekannter Weise ein Anlagethermometer 32 eingesetzt werden kann (Fig. 4a). Wird kein Anlagethermometer 32 benötigt, kann die Öffnung des Stutzens 31 durch einen Deckel 33 verschlossen werden (Fig. 4b).

In Fig. 5 ist schließlich noch gezeigt, wie die Armatur nach Fig. 1 durch ein Regelventil ergänzt werden kann. In diesem Fall mündet die von der Nebenkammer 12 ausgehende Querbohrung 13 in eine weitere Nebenkammer 34, die in einem weiteren Anschlussstutzen 35 gebildet ist, der diametral zu dem Seitenstutzen 8, aber in derselben Ebene angeordnet ist. Während der Seitenstutzen 8 mit der Durchfluss-Mess- und Einstelleinrichtung 10 unter dem spitzen Winkel α gegen die Hauptachse X-X des Armaturgehäuses 2 geneigt ist, ist die Achse des Anschlussstutzens 35 unter dem spitzen Winkel β zur Armaturhauptachse X-X geneigt.

In die Öffnung 36 des Anschlussstutzens 35 ist ein Regelventil 37 üblicher Bauart eingesetzt, dessen Ventilteller 38 gegen einen Ventilsitz 39 wirkt, der am Übergang der Querbohrung 13 zur Nebenkammer 34 gebildet ist. Die Nebenkammer 34 mündet dann unmittelbar wieder in die Auslaufbohrung 6 des Auslaufstutzens 4.

## Patentansprüche

1. Armatur zum Messen der Durchflussmenge eines hydraulischen Mediums durch eine Rohrleitung,
mit einem einen Durchfluss-Hauptkanal enthaltenden zylindrischen Armaturgehäuse (2)
- und mit einer Durchfluss-Messeinrichtung (10), die einen Messteil und einen Anzelgeteil umfasst,
wobei das Armaturgehäuse (2) eine Einlaufbohrung (5), eine Auslaufbohrung (6) und einen Seitenstutzen (8) aufweist, In dem eine Nebenkammer (12) gebildet ist,
wobei die Durchfluss-Messeinrichtung (10) in einer Öffnung des Seitenstutzens (8), diese nach außen abschließend, gehalten ist
- und wobei ein Praliteller (24) des Messteils in einer den Zufluss zur Nebenkammer (12) bildenden Messbohrung (11) angeordnet und durch eine in einer Axialbohrung längsbeweglich geführte Anzeigestange (23) mit einem Zeiger (25) des außerhalb des Seitenstutzens (8) angeordneten Anzeigeteils verbunden ist,
**dadurch gekennzeichnet, dass** die Achse des Seitenstutzens (8) unter einem spitzen Winkel (α) gegen die Achse (X-X) des Armaturgehäuses (2) geneigt ist, dass durch den Seitenstutzen (8) im Bereich des Armaturgehäuses (2) die Messbohrung (11), welche die Einlaufbohrung (5) fortsetzt, gebildet ist,
dass die Messbohrung (11) im Seitenstutzen (8) in die Nebenkammer (12) übergeht, die sich ihrerseits seitlich mittels einer Querbohrung (13) zur Auslaufbohrung (6) hin öffnet,
und dass der Durchfluss-Hauptkanal zwischen Einlaufbohrung (5) und Auslaufbohrung (6) durch die in die Nebenkammer (12) führende Messbohrung (11), die Nebenkammer (12) selbst sowie die Querbohrung (13) gebildet ist.

2. Armatur nach Anspruch 1 , **dadurch gekennzeichnet, dass** die Durchfluss-Messeinrichtung (10) ein in einem Spindelgehäuse (16) drehbar gehaltenes Schauglas (18) und einen Ventil-Verschlusskörper (21) umfasst, der mit dem Schauglas (18) drehfest, aber axial verschieblich verbunden ist und gegen einen im Armaturgehäuse (2) angeordneten Ventilsitz (30) wirkt.

3. Armatur nach Anspruch 1 oder 2, **dadurch gekennzeichnet, dass** das Armaturgehäuse (2) einen weiteren Seitenstutzen (35) aufweist, dessen Bohrung in den Durchfluss-Hauptkanal mündet und in dessen Öffnung (36) ein Regelventil (37), diese nach außen abschließend, gehalten ist.

4. Armatur nach Anspruch 3, **dadurch gekennzeichnet, dass** die Achse des Seitenstutzens (31) unter einem spitzen Winkel β zu der Achse X-X des Armaturgehäuses geneigt ist.

5. Armatur nach Anspruch 3 oder 4, **dadurch gekennzeichnet, dass** die beiden Anschlussstutzen (8 und 35) bezüglich der Achse X-X des Armaturgehäuses (2) in einer gemeinsamen Ebene diametral einander gegenüberliegen.

6. Armatur nach einem der Ansprüche 1 bis 5, **dadurch gekennzeichnet, dass** an dem Armaturgehäuse (2) ein weiterer Stutzen (31) angeordnet ist, der eine sacklochartige Aufnahme für ein Anlagethermometer (32) bildet.

## Claims

1. A fitting for measuring a flow rate of a hydraulic medium through a pipe,
with a cylindrical fitting housing (2) containing a main flow duct
- and with a flow-measuring device (10) which comprises a measuring member and an indicator member,
wherein the fitting housing (2) has an inlet bore (5), an outlet bore (6) and a side connector (8) in which a secondary chamber (12) is formed,
wherein the flow-measuring device (10) is mounted in an opening of the side connector and seals its from the outside,
- and wherein a deflecting plate (24) of the measuring member is arranged in a measuring bore (11) forming the inflow to the secondary chamber (12) and is connected by an indicator rod (23) which is guided longitudinally displaceably in an axial bore with an indicator (25) of the indicator member arranged outside the side connector (8),
**characterised in that** the axis of the side connector (8)is inclined at an acute angle (∞) in relation to the axis (x-x) of the fitting housing (2), **in that** the measuring bore (11), which continues the inlet bore (5), is formed by the side connector (8) in the vicinity of the fitting housing (2),
**in that** the measuring bore (11) in the side connector (8) merges into the secondary chamber (12) which, in turn, opens laterally towards the outlet bore (6) by means of a transverse bore (13),
and **in that** the main flow duct between the inlet bore (5) and the outlet bore (6) is formed by the measuring bore (11) leading into the secondary chamber (12), the secondary chamber (12) itself and also the transverse bore (13).

2. A fitting according to Claim 1, **characterised in that** the flow-measuring device (10) comprises an inspection glass (18), which is mounted rotatably in a spindle housing (16), and a valve closure member (21) which is connected in a manner precluding relative rotation but axially displaceably to the inspection glass (18), and which acts against a valve seat (30) arranged in the fitting housing (2).

3. A fitting according to Claim 1 or 2, **characterised in that** the fitting housing (2) has a further side connector (35) whose bore opens into the main flow duct and in the opening (36) of which is mounted a control valve (37) which seals it from the outside.

4. A fitting according to Claim 3, **characterised in that** the axis of the side connector (31) is inclined at an acute angle (β) to the axis X-X of the fitting housing (2).

5. A fitting according to Claim 3 or 4, **characterised in that** the two connector sockets (8 and 35) are arranged diametrically opposite one another in a common plane in relation to the axis X-X of the fitting housing (2).

6. A fitting according to any one of Claims 1 to 5, **characterised in that** a further connector (31) is arranged on the fitting housing (2) and forms a receptacle of blind-hole type for a system thermometer (32).

## Revendications

1. Appareil de robinetterie pour mesurer le débit d'un fluide hydraulique dans une conduite,
avec un corps d'appareil cylindrique (2) contenant un canal principal de passage,
et avec un dispositif (10) de mesure de débit, qui comprend un élément de mesure et un élément d'affichage,
sachant que le corps d'appareil (2) présente un perçage d'entrée (5), un perçage de sortie (6) et une tubulure latérale (8) dans laquelle est formée une chambre secondaire (12), sachant que le dispositif (10) de mesure de débit est maintenu dans une ouverture de la tubulure latérale (8), en fermant celle-ci vers l'extérieur,
et sachant qu'une plaque de rebondissement (24) de l'élément de mesure est disposée dans un perçage de mesure (11) formant l'admission vers la chambre secondaire (12) et est reliée, par une tige d'affichage (23) guidée en déplacement longitudinal dans un perçage axial, à une aiguille (25) de l'élément d'affichage disposé à l'extérieur de la tubulure latérale (8),
**caractérisé en ce que** l'axe de la tubulure latérale (8) est incliné sous un angle aigu (α) par rapport à l'axe (X-X) du corps d'appareil (2),
**en ce que** le perçage de mesure (11), qui prolonge le perçage d'entrée (5), est formé par la tubulure latérale (8) dans la région du corps d'appareil (2),
**en ce que** le perçage de mesure (11) se raccorde dans la tubulure latérale (8) à la chambre secondaire (12), qui s'ouvre elle-même sur le côté, au moyen d'un perçage transversal (13), vers le perçage de sortie (6),
et **en ce que** le canal principal de passage entre le perçage d'entrée (5) et le perçage de sortie (6) est formé par le perçage de mesure (11) menant dans la chambre secondaire (12), la chambre secondaire (12) elle-même et le perçage transversal (13).

2. Appareil de robinetterie selon la revendication 1, **caractérisé en ce que** le dispositif (10) de mesure de débit comprend un verre de regard (18), maintenu à rotation dans un boîtier de vis sans fin (16), et un obturateur de soupape (21), qui est relié au verre de regard (18) en solidarité de rotation mais à translation axiale et qui agit contre un siège de soupape (30) disposé dans le corps d'appareil (2).

3. Appareil de robinetterie selon la revendication 1 ou 2, **caractérisé en ce que** le corps d'appareil (2) présente une autre tubulure latérale (35), dont le perçage débouche dans le canal principal de passage et dans l'ouverture (36) de laquelle est maintenue une soupape de régulation (37), en fermant celle-ci vers l'extérieur.

4. Appareil de robinetterie selon la revendication 3, **caractérisé en ce que** l'axe de la tubulure latérale (35) est incliné sous un angle aigu (β) par rapport à l'axe X-X du corps d'appareil.

5. Appareil de robinetterie selon la revendication 3 ou 4, **caractérisé en ce que** les deux tubulures de raccordement (8 et 35) sont diamétralement opposées dans un plan commun par rapport à l'axe X-X du corps d'appareil (2).

6. Appareil de robinetterie selon l'une des revendications 1 à 5, **caractérisé en ce qu'**une autre tubulure (31) est disposée sur le corps d'appareil (2), laquelle forme un logement du genre trou borgne pour un thermomètre d'installation (32).
